(19) Europäisches Patentamt
European Patent Office
Office européen des brevets

(11) **EP 3 953 287 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **20723014.5**

(22) Anmeldetag: **14.04.2020**

(51) Internationale Patentklassifikation (IPC):
**B66C 13/08** (2006.01)   **B66C 13/06** (2006.01)

(52) Gemeinsame Patentklassifikation (CPC):
**B66C 13/085; B66C 13/063**

(86) Internationale Anmeldenummer:
**PCT/EP2020/060477**

(87) Internationale Veröffentlichungsnummer:
**WO 2020/208263 (15.10.2020 Gazette 2020/42)**

(54) **VORRICHTUNG ZUR STEUERUNG EINER AN EINEM STRANG HÄNGENDEN LAST**

APPARATUS FOR CONTROLLING A LOAD SUSPENDED ON A CORD

DISPOSITIF POUR LA COMMANDE D'UNE CHARGE SUSPENDUE À UNE CORDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2019 DE 102019205329**

(43) Veröffentlichungstag der Anmeldung:
**16.02.2022 Patentblatt 2022/07**

(73) Patentinhaber: **Construction Robotics GmbH 52074 Aachen (DE)**

(72) Erfinder:
• **HAARHOFF, Daniel Cambridge CB1 3PR (GB)**
• **STUMM, Sven Christoph 52070 Aachen (DE)**
• **BRELL-COKCAN, Sigrid 52064 Aachen (DE)**

(74) Vertreter: **Grünecker Patent- und Rechtsanwälte PartG mbB Leopoldstraße 4 80802 München (DE)**

(56) Entgegenhaltungen:
WO-A1-2015/082347     WO-A1-2018/192675
US-A- 5 871 249     US-A1- 2015 344 271

**Beschreibung**

Die vorliegende Erfindung betrifft eine Vorrichtung zur Steuerung einer an einem Strang hängenden Last.

Lasten werden seit jeher durch Kräne bewegt. Dabei hängt die Last üblicherweise an mindestens einem Strang, der an dem Kran befestigt ist. In der Regel läuft der Strang über Umlenkrollen am Kran, sodass die Länge des Strangs durch einen entsprechenden Antrieb einstellbar ist, um die Last in vertikaler Richtung zu bewegen. In Tangentialrichtung kann die Last für gewöhnlich durch Drehen des Krans bewegt werden. In radialer Richtung ist die Last regelmä-ßig mittels einer in horizontaler Richtung bewegbaren Laufkatze oder eines aufwippbaren Auslegers bewegbar. Bei Portal- und Brückenkränen finden die Bewegungen statt radial und tangential in kartesischer Raumrichtung durch Verfahren eines Trägers mit daran beweglicher Laufkatze statt. Meist weist der Strang an seinem freien Ende einen Haken auf, an dem die Last üblicherweise lösbar befestigt ist.

In der Regel führen die durch die Kransteuerung verursachten genannten Bewegungen zu sphärisch Pendelschwingungen der Last, die mittels einer intelligenten Regelung der Kransteuerung gedämpft werden können. Eine solche intelligente Regelung wird im Fachjargon "Lastpendeldämpfung" genannt.

Sphärische Pendelschwingungen einer Last können auch durch äußere Störgrößen, wie zum Beispiel Wind oder Stöße, verursacht werden. Dieser Einfluss durch äußere Störgrößen ist zusätzlich bei einem Kran zu berücksichtigen und führt dazu, dass auch bei einem ortsfest gehaltenen Aufhängungspunkt des Strangs sphärische Pendelschwingungen der Last auftreten können.

Die bekannte Lastpendeldämpfung richtet das Augenmerk lediglich auf die Dynamik im Bereich zwischen dem Haken und dem Aufhängungspunkt des Strangs. Unberücksichtigt bleibt dabei, dass auch eine Bewegung der Last, beispielsweise durch Wind oder durch Stöße an Gebäuden verursacht, zu einer Pendelbewegung der Last führen kann, die die Lastpendeldämpfung erschwert bzw. deren Effizienz verringert. Die vorliegende Erfindung will eine ganzheitliche Lösung zur Stabilisierung einer an einem Strang hängenden Last angeben, die insbesondere auch die Wechselwirkungen der beiden genannten Dynamiken berücksichtigt.

Daneben zeigen WO 2018/192675 A1 und US 2015/344271 A1 Vorrichtungen zur Steuerung einer an einem Strang hängenden beweglichen Last, bei der die bewegliche Last eine Ausgleichseinrichtung aufweist, die etwaige ungewollte Bewegungen der Last ausgleichen und verhindern. Dabei wird die Ausgleichseinrichtung der US 2015/344271 A1 zusätzlich zur Einstellung einer Orientierung der Last genutzt, wobei eine Steuerungseinheit vorgesehen ist, die die Steuerungssignale zur Ausrichtung der Last bei dem Ausgleich von ungewollten Bewegungen berücksichtigt.

Das Dokument WO 2018/192675 A1 offenbart die Merkmale gemäß dem Oberbegriff des Anspruchs 1.

Eine Aufgabe der vorliegenden Erfindung ist es daher, die Kontrolle über die Lage und die Bewegung einer an einem Strang hängenden Last zu verbessern um damit die kontrollierte Positionierung und Bewegung eines Aktors zu ermöglichen.

Zur Lösung dieser Aufgabenstellung schlägt die vorliegende Erfindung eine Vorrichtung mit den Merkmalen von Anspruch 1 vor.

Die erfindungsgemäße Vorrichtung hat einen steuerbaren Aktor. Bei diesem steuerbaren Aktor handelt es sich um einen Montageroboter. Die erfindungsgemäße Vorrichtung hat eine Steuerungseinrichtung die dazu vorgesehen ist, Steuerungsbefehle zur Steuerung des Aktors im Hinblick auf die Bewegung desselben zu verwenden, sowie zur Vorhersage der resultierenden Gegenkräfte, -momente und damit verbundenen Bewegungen zu nutzen. Mit dieser Vorhersage wird eine Ausgleichseinrichtung angesteuert, die an dem Strang hängt und als Teil der Last angesehen werden kann und die die zu erwartende Gegenbewegung üblicherweise zeitgleich mit dem Ansteuern des Aktors ausgleicht oder verhindert. Die zu erwartende Gegenbewegung kann dabei berechnet oder aus einem Speicher ausgelesen werden, der beispielsweise auch durch künstliche Intelligenz im Betrieb ergänzt wird und tatsächliche Gegenbewegungen beim Ansteuern des Aktors ermittelt und in die Vorhersage zukünftiger Gegenbewegungen einbezieht. Die Ausgleichseinrichtung kann dabei jede denkbare und üblicherweise mit der Last direkt verbundene Einrichtung sein, die ein/e Ausgleichsmoment/-kraft, üblicherweise mehrere orthogonal zueinander wirkende Ausgleichsmomente erzeugen kann. Das Ausgleichsmoment bzw. die Ausgleichskraft kann dabei durch eine bewegliche, mit der Last verbundene Masse, durch einen Impuls, beispielsweise durch einen durch einen Fluidstoß erzeugten Impuls, einen mit einer Ausgleichsmasse verbundenen Roboter oder ein Gyroskop erzeugt werden. Die zuvor erwähnten Einrichtungen können auch in Kombination mit der Last verbunden sein. Die entsprechende Ausgleichseinrichtung wird dabei über die Steuerungseinheit angesteuert. So sind üblicherweise die Ausgleichseinrichtung und der Aktor über eine gemeinsame Steuerungseinheit verbunden, die einerseits im Falle eines Montageroboters dessen Montagebewegungen steuert und parallel und zeitgleich dazu die Ausgleichseinrichtung veranlasst, die Last ohne Störung durch die sich aufgrund der Montagebewegungen ergebenden Störungen in ihrer Lage zu halten oder in vorbestimmter Weise im Raum zu verändern.

Aufgrund dieser Ausgestaltung wird mit der erfindungsgemäßen Vorrichtung bei betätigen des Aktors die sich üblicherweise damit zwangsläufig ergebende Reaktionsbewegung der Last ganz oder teilweise verhindert. So bleibt die Last in ihrer Lage, wodurch die Last Lage getreu gehalten werden kann, auch wenn auf der Last zumindest ein Aktor angetrieben wird.

**EP 3 953 287 B1**

Die erfindungsgemäße Vorrichtung zur Steuerung einer an einem Strang hängenden Last umfasst bevorzugt eine Mehrzahl an Gyroskopen, die zur Übertragung eines Kraftmoments mit der Last koppelbar sind, wobei das Kraftmoment durch eine Rotation einer Drehachse von mindestens einem der Gyroskope erzeugbar ist, und eine steuerungsmäßig mit den Gyroskopen verbundene Steuerungseinheit, mittels der die Rotation der Drehachse derart steuerbar ist, dass eine Pendelbewegung der Last ausgleichbar und/oder verhinderbar und die Last um ihre Aufhängung an dem Strang kipp- und/oder rotierbar ist. Die Vorrichtung kann in ein Kopplungselement, beispielsweise einen Haken, zur Befestigung der Last an dem Strang integriert sein. Die Vorrichtung kann insofern mittelbar mit der Last koppelbar sein, indem beispielsweise die Last mit Befestigungselementen an dem Kopplungselement befestigt ist und die Befestigungselemente das Kraftmoment der Gyroskope auf die Last übertragen. Die Vorrichtung kann aber auch unmittelbar mit der Last koppelbar, insbesondere verdrehfest mit derselben verbunden sein, sodass das Drehmoment der Gyroskope der Vorrichtung unmittelbar auf die Last übertragen wird.

Als Strang im Sinne der vorliegenden Erfindung ist in der Regel ein Seil zu verstehen, das üblicherweise aus zusammengedrehten oder geflochtenen Natur- oder Kunstfasern oder Drähten gebildet ist. Ein Seil ist für gewöhnlich ein längliches zugfestes elastisches Element. Ein Strang im Sinne der vorliegenden Erfindung kann an seinem freien Ende einen Haken aufweisen, an dem die Last üblicherweise lösbar befestigt ist. Der Haken kann verdrehfest oder über ein Drehlager mit dem Strang verbunden sein. Vorzugsweise ist der Haken durch das Drehlager um mindestens 180°, sehr bevorzugt um 360° in der Horizontalen drehbar. Eine Last im Sinne der vorliegenden Erfindung kann ein starres Bauteil, beispielsweise ein Stahlträger oder eine Plattform, ein bewegliches Element, beispielsweise ein Lebewesen oder ein Roboter, oder eine Kombination eines starren Bauteils und eines beweglichen Elements sein. Die vorliegende Erfindung nimmt insbesondere frei hängende Stränge in den Blick, sodass eine an dem Strang befestigte Last grundsätzlich zu sphärischen Pendelbewegungen fähig ist.

Bevorzugt ist die erfindungsgemäße Vorrichtung lösbar mit der Last verdrehfest verbunden. Weiter bevorzugt ist die erfindungsgemäße Vorrichtung in eine Plattform integriert, die beispielsweise durch Seile an dem Haken des Stangs befestigt werden kann und wobei die Plattform die Last trägt oder die Last an der Plattform befestigt ist.

Ein Gyroskop nach der vorliegenden Erfindung umfasst einen Rotor, einen zum Drehen des Rotors um eine Rotorachse vorgesehenen Motor, wobei die Rotorachse üblicherweise drehfest mit dem Rotor verbunden ist, einen Kreiselrahmen und einen Kreiselrahmendrehmotor zum Drehen des Kreiselrahmens um eine Kreiselrahmenachse, wobei der Rotor mechanisch in dem Kreiselrahmen gehalten ist, sodass die Rotorachse bei einer Drehung des Kreiselrahmens rotiert. Die Kreiselrahmenachse und die Rotorachse stehen in der Regel senkrecht aufeinander, sodass eine Rotation der Rotorachse des sich drehenden Rotors ein resultierendes Drehmoment in einer dritten Richtung erzeugt, die orthogonal zu der Kreiselrahmenachse und der Rotorachse ist. Dieses resultierende Drehmoment wird üblicherweise über die den Kreiselrahmen rotierenden Lager auf die Vorrichtung übertragen. Die Lager können von einem Kreiselrahmenträger der Vorrichtung gehalten sein, an dem die Last befestigbar ist. Ein Gyroskop nach der vorliegenden Erfindung kann wie in EP 0 675 824 B1 beschrieben ausgestaltet sein. Der fundamentale Zusammenhang zwischen dem Drehimpuls des Rotors $\vec{h}$ , der Winkelgeschwindigkeit des Kreiselrahmens $\vec{\omega}$ und dem resultierenden Drehmoment $\vec{\tau}$ ist durch die Gleichung

$$\vec{\tau} = -\vec{\omega} \times \vec{h}$$

gegeben. Steht der Drehimpuls des Rotors $\vec{h}$ orthogonal zu der Winkelgeschwindigkeit des Kreiselrahmens $\vec{\omega}$ ist das resultierende Drehmoment $\vec{\tau}$ in der dritten Richtung proportional zu der Winkelgeschwindigkeit des Kreiselrahmens. Der Drehimpuls des Rotors wird durch den im zugeordneten Motor in der Regel auf einem konstanten Wert gehalten.

Aus "An attitude control and stabilization of an unstructured object using balancing beam, new contstruction machinery- 2001" beispielsweise ist eine ein Gyroskop aufweisende Vorrichtung zur Lagestabilisierung einer an einem Strang hängenden Last (Stahlträger) bekannt. Das Gyroskop ist dabei derart ausgerichtet, dass durch Rotation der Drehachse des Gyroskops ein Drehmoment in vertikaler Richtung auf die Vorrichtung wirkt, welches auf den Stahlträger übertragen wird, der mit der Vorrichtung verbunden ist. Über eine Fernsteuerung kann die Rotation der Drehachse des Gyroskops gesteuert und so der Stahlträger in der Horizontalen gedreht werden.

Die Vorrichtung nach der vorliegenden Erfindung hat eine Steuerungseinheit, die steuerungsmäßig mit einer Mehrzahl an Gyroskopen verbunden ist. Insbesondere steuert die Steuerungseinheit das resultierende Drehmoment in der dritten Richtung durch Ansteuern des Kreiselrahmendrehmotors der Gyroskope. Die Anzahl der Gyroskope nach der vorliegenden Erfindung beträgt mindestens zwei. Dabei kann ein Gyroskop so angeordnet sein, dass sein resultierendes Drehmoment in vertikaler Richtung zeigt, und ein zweites Gyroskop so angeordnet sein, dass sein resultierendes Drehmoment in horizontaler Richtung zeigt. So kann eine mit der Vorrichtung verbundene Last um eine horizontale Achse gekippt und die horizontale Achse um die Vertikale rotiert werden. Diese kontrollierte Lageänderung der Last kann so durch die Steuerungseinheit gesteuert werden, dass eine Pendelbewegung der Last ausgleichbar und/oder verhinderbar ist. Die Steuerungseinheit kann mit einem optischen Sensor und/oder einem Beschleunigungssensor kommunizieren, wobei der Sensor eine Pendelbewegung der Last erfasst, und/oder über eine Informationsschnittstelle Informationen über eine zu erwartende Pendelbewegung erhalten. Die Steuerungseinheit kann mit einem Sensor zur Erfassung der Windverhältnisse oder einem Sensor oder einer Kamera zur Erfassung eines Abstands der Last zu anderen Objekten kommunizieren, dessen Signale von einer Logikeinheit der Steuerungseinheit zur Vorausberechnung einer zu erwartenden Pendelbewegung aufgrund einer Windanregung oder eines Stoßes auswertbar sind. Auch ein Sensor zur Erfassung einer Lageänderung des Schwerpunkts der Vorrichtung und/oder der Last kann vorgesehen sein und zur Übersendung von Signalen an die Steuerungseinheit angepasst ausgebildet sein.

Da die Steuerungseinheit der erfindungsgemäßen Vorrichtung sowohl zum Ausgleich bzw. Verhindern einer Pendelbewegung der Last als auch zum Kippen und zum Rotieren der Last um ihre Aufhängung angepasst ausgebildet ist, kann die Kontrolle über die Lage und die Bewegung der an einem Strang hängenden Last gegenüber dem Stand der Technik verbessert werden.

Bevorzugt beträgt die Anzahl der Gyroskope nach der vorliegenden Erfindung mindestens drei, wobei die resultierenden Drehmomente eines ersten, eines zweiten und eines dritten Gyroskops üblicherweise in zueinander jeweils orthogonalen Raumrichtungen zeigen. Somit kann zu einem bestimmten Zeitpunkt ein resultierendes Gesamtdrehmoment in einer beliebigen Raumrichtung erzeugt werden. Dadurch können Pendelbewegungen effizienter ausgeglichen bzw. verhindert werden.

Besonders bevorzugt beträgt die Anzahl der Gyroskope nach der vorliegenden Erfindung mindestens vier. Dadurch können Singularitäten vermieden werden. Die Summe der Drehimpulsvektoren aller Gyroskope kann sowohl in Orientierung als auch Betrag durch das Verdrehen ihrer Kreiselrahmen verändert werden. Die Veränderung des Drehimpulsvektors entspricht in der Regel dem resultierenden Drehmoment. Der Drehimpuls der Gyroskope und die Anordnung ihrer Kreiselrahmenachsen spannen einen spezifischen Drehimpulsraum auf. Auf der äußeren Hülle des spezifischen Drehimpulsraums angelangt, kann die Anordnung kein Drehmoment in bestimmte Richtungen entwickeln. Hier spricht man von äußeren Singularitäten oder auch von Sättigung. Je nach Anordnung entstehen im Inneren des spezifischen Drehimpulsraums weitere Singularitäten, wenn bspw. mehrere Drehimpulsvektoren parallel liegen.

Sobald die Vorrichtung mindestens vier Gyroskope aufweist, die ein einer bestimmten Ausrichtung zueinander angeordnet sind, können die Drehimpulse der Gyroskope so verändert werden, dass kein resultierendes Gesamtdrehmoment entsteht. Dies eröffnet die Möglichkeit, die Gyroskope in Reaktion auf eine Information über eine zu erwartende Pendelbewegung in einen Zustand zu versetzen, in dem die erfindungsgemäße Vorrichtung die zu erwartende Pendelbewegung besonders effizient ausgleichen bzw. verhindern kann. Vorzugsweise sind vier Gyroskope in einer sogenannten Pyramiden-Konfiguration ("CMG pyramid array") angeordnet.

Nach einer bevorzugten Weiterbildung der vorliegenden Erfindung ist die Vorrichtung derart eingerichtet, dass die Last in einer Lage, die nicht der Gleichgewichtslage entspricht, in einem Kräftegleichgewicht haltbar ist. Dabei ist in der Regel die Lage als Gleichgewichtslage zu verstehen, die die Last einnimmt, wenn abgesehen von der Gewichtskraft und der die gewichtskraftkompensierende Seilkraft keine weiteren äußeren Kräfte auf die Last einwirken. Die Gleichgewichtslage ist in der Regel die Lage der geringstmöglichen potentiellen Energie unter der Voraussetzung, dass die Länge des Strangs nicht verändert wird. Wird die Last also aus dieser Gleichgewichtslage verbracht, stellt sich eine Rückstellkraft in Richtung der Gleichgewichtslage ein. Die Rotoren, die die Rotoren antreibenden Motoren, die Kreiselrahmen und die die Kreiselrahmen antreibenden Kreiselrahmendrehmotoren der Gyroskope sind bevorzugt derart ausgelegt, dass sie diese Rückstellkraft kompensieren können. So kann ein Kräftegleichgewicht in einer Lage der Last, die nicht der Gleichgewichtslage entspricht, hergestellt werden.

Nach einer weiteren bevorzugten Weiterbildung der vorliegenden Erfindung umfasst die Last ein bewegliches Element, wobei die Steuerungseinheit derart eingerichtet ist, dass eine durch eine Bewegung des beweglichen Elements hervorrufbare Gegenbewegung der Last durch Ansteuern mindestens eines der Gyroskope ausgleichbar und/oder verhinderbar ist. Ein bewegliches Element im Sinne der Anmeldung kann ein Lebewesen, insbesondere ein Mensch, ein Roboter oder ein anderer steuerbarer Aktor sein. In der Regel hat gemäß dem dritten newtonschen Axioms jede Bewegung des beweglichen Elements eine Gegenbewegung der Last zur Folge. Diese Gegenbewegung kann eine Pendelschwingung der Last verursachen und ist daher im Sinne der Lagestabilisierung der Last auszugleichen bzw. zu verhindern.

Die vorliegende Weiterbildung nimmt vorzugsweise abzuseilende Personen, die gegenüber Pendelbewegungen abgesichert und deren Aktionsraum vergrößert werden soll, und besonders bevorzugt auf einer Plattform befindliche Personen und/oder einen an der Plattform befestigten Aktor zur Ausführung eines Arbeitsschritts in den Blick. Die Vorrichtung kann einen Sensor aufweisen, der eine Bewegung des beweglichen Elements registriert und seine Signale an die Steuerungseinheit sendet, die diese Signale zum Ausgleich und/oder zum Verhindern einer Gegenbewegung der Last durch Ansteuern mindestens eines der Gyroskope auswertet.

Dadurch kann die Vorrichtung nach dieser Weiterbildung neue Aktionsmöglichkeiten erschlie-ßen und ihren Aktionsradius vergrößern.

Bevorzugt weist die Last einen steuerbaren Aktor als bewegliches Element auf, wobei die Steuerungseinheit dazu eingerichtet ist, Steuerungsbefehle eines Steuerungsmoduls zur Steuerung des Aktors zur Vorhersage einer zu erwartenden Gegenbewegung der Last zu verwenden, um die Gegenbewegung der Last durch Ansteuern mindestens eines der Gyroskope auszugleichen und/oder zu verhindern. Das Steuerungsmodul des Aktors kann als separates Modul zur Kommunikation mit der Steuerungseinheit angepasst ausgebildet oder in die Steuerungseinheit integriert sein. In der Regel ist das Steuerungsmodul mit mindestens einem Antrieb des Aktors steuerungsmäßig verbunden. Meist ist das Steuerungsmodul zur Kommunikation mit mindestens einem dem Aktor zugeordneten Sensor angepasst ausgebildet. Eine Logikeinheit wertet in der Regel die Steuerungsbefehle des Steuerungsmoduls des Aktors aus. Bevorzugt vergleicht die Logikeinheit die Steuerungsbefehle des Steuerungsmoduls mit einem in der Steuerungseinheit hinterlegten Reaktionsplan, aus dem die zu erwartende Gegenbewegung der Last hervorgeht. Der Reaktionsplan kann in einer gesicherten Umgebung, Durchlaufen der möglichen Steuerungsabläufe des Aktors, Simulation vorab, simulativer Prädiktion und durch Erfassen der jeweiligen Gegenbewegungen der Last erstellt worden sein. Üblicherweise kann die Logikeinheit die Motormomente des mindestens einen Antriebs des Aktors und eine dazugehörige zu erwartende Gegenbewegung durch die Steuerungsbefehle des Steuerungsmoduls und durch den Reaktionsplan vorhersagen bzw. schätzen.

Weiter bevorzugt sind die Bewegungen des steuerbaren Aktors derart steuerbar, dass sie die Pendelbewegung der Last unterstützend ausgleichen und/oder verhindern. Dies kann erforderlich sein, wenn die Pendelbewegung der Last ein Ausmaß erreicht, welches mittels der Gyroskope allein nicht ausgleichbar und/oder verhinderbar ist. Durch Kommunikation zwischen der Steuerungseinheit und dem Steuerungsmodul werden die jeweiligen Steuerungsbefehle für die Steuerungseinrichtung aufeinander abgestimmt. Die Ausgleichseinrichtung muss nicht zwingend ein Gyroskop aufweisen.

Nach einer weiteren bevorzugten Weiterbildung der vorliegenden Erfindung ist der steuerbare Aktor derart ausgebildet, dass mittels des Aktors ein Arbeitsschritt ausführbar ist, dessen Wechselwirkungsmoment auf die Last durch Ansteuern mindestens eines der Gyroskope ausgleichbar ist. Als Arbeitsschritt kann insbesondere das Greifen, Bewegen oder Befestigen von Gegenständen bzw. Bauteilen, Schweißen, Pressen, Farbe aufsprühen oder dergleichen angesehen werden. Zur Ausführung eines Arbeitsschritts kann eine Kraft oder ein Kraftmoment erforderlich sein. Diese Kraft oder dieses Kraftmoment kann von dem Antrieb des Aktors erzeugt werden. Gemäß dem dritten newtonschen Axiom wiederum ruft eine solche Kraft oder ein solches Kraftmoment üblicherweise ein Wechselwirkungskraftmoment, in Regel um den Massenschwerpunkt der Vorrichtung hervor, welches durch Ansteuern mindestens eines der Gyroskope ausgleichbar ist. Denkbar ist auch, dass das zur Ausführung des Arbeitsschritts erforderliche Kraftmoment bzw. die Kraft durch Ansteuern mindestens eines der Gyroskope erzeugt wird. Bevorzugt sind in der Logikeinheit die Kräfte bzw. Kraftmomente hinterlegt, die die mit dem Aktor ausführbaren Arbeitsschritte erfordern.

Dadurch ermöglicht die Vorrichtung nach dieser Weiterbildung das Ausführen automatisierter Arbeitsvorgänge an schwer zugänglichen Orten. Die Vorrichtung nach dieser bevorzugten Weiterbildung kann beispielsweise an einem Kran befestigt werden und ist damit insbesondere für Baustellen geeignet.

Nach einer weiteren bevorzugten Weiterbildung der vorliegenden Erfindung weist die Vorrichtung einen Sensor zur Erfassung einer externen Störgröße auf, wobei die Signale des Sensors an die Steuerungseinheit übermittelbar und von dieser zum Ausgleich und/oder zum Verhindern der Pendelbewegung der Last durch Ansteuern mindestens eines der Gyroskope auswertbar sind. Eine externe Störgröße im Sinne der Erfindung ist in der Regel eine von außen auf das System aus Vorrichtung, Strang, Last und ggf. Kran wirkender Einfluss. Eine externe Störgröße ist beispielsweise der Wind, Stöße mit anderen Gegenständen bzw. Objekten oder ein manuelles Ziehen oder Drücken an der Vorrichtung. Bevorzugt kommuniziert die Steuerungseinheit mit einem Sensor zur Erfassung der Windverhältnisse oder einem Sensor zur Erfassung eines Abstands der Last zu anderen Objekten, dessen Signale von einer Logikeinheit der Steuerungseinheit zur Vorausberechnung einer zu erwartenden Pendelbewegung aufgrund einer Windanregung oder eines Stoßes auswertbar sind. Die Logikeinheit berechnet in der Regel ein Drehmoment, das dazu geeignet ist, die zu erwartende Pendelbewegung auszugleichen, d.h. in der Regel abzuschwächen, oder zu verhindern. Die Steuerungseinheit steuert dann vorzugsweise die Gyroskope zum Zeitpunkt des zu erwartenden Einsetzens der Pendelbewegung an.

Nach einer weiteren bevorzugten Weiterbildung der vorliegenden Erfindung weist Vorrichtung einen Sensor zur Erfassung einer Pendelbewegung der Last auf, wobei die Signale an die Steuerungseinheit übermittelbar und von dieser zum Ausgleich und/oder zum Verhindern der Pendelbewegung der Last durch Ansteuern mindestens eines der Gyroskope auswertbar sind. Der Sensor nach dieser Weiterbildung kann ein optischer Sensor oder ein Beschleunigungssensor sein. Ebenfalls denkbar ist die induktive Messung einer Strangauslenkung, die Ermittlung einer Zugrichtung an dem Strang durch Kraftsensoren und/oder eine Positionsbestimmung mittels Radarsensoren.

Nach einer weiteren bevorzugten Weiterbildung der vorliegenden Erfindung weist die Vorrichtung einen Sensor zur Erfassung einer Lage der Last relativ zu ihrer Aufhängung auf, wobei die Signale an die Steuerungseinheit übermittelbar und von dieser auswertbar sind. Der Sensor nach dieser Weiterbildung kann ein optischer Sensor sein. Vorzugsweise weist die Vorrichtung ein als Lagesensor ausgebildetes Sensorgyroskop auf, wobei der Kreiselrahmen des Sensorgyroskops in der Regel drehfest mit der Last verbunden ist, sodass aufgrund der Drehimpulserhaltung des Rotors des Sensorgyroskops eine Lageänderung der Last eine Lageänderung der Rotorachse des Sensorgyroskops relativ zu dem Kreiselrahmen zur Folge hat.

Nach einer weiteren bevorzugten Weiterbildung der vorliegenden Erfindung weist die Vorrichtung ein Modul zur Bestimmung einer Trägheit der Last anhand einer gemessenen Rotationsgeschwindigkeit der Last und einem durch mindestens eines der Gyroskope auf die Last übertragenen Drehmoment auf. Ein Drehmoment ist bekanntlich das Produkt aus Trägheitsmoment und Winkelbeschleunigung. Üblicherweise weist die Vorrichtung hierfür einen Sensor zur Messung der Rotationsgeschwindigkeit auf. Die von dem Modul bestimmte Trägheit der Last wird in der Regel an die Steuerungseinheit übermittelt und von dieser bei der Ansteuerung der Gyroskope berücksichtigt.

In einem zweiten Aspekt gibt die vorliegende Erfindung einen Kran mit einer Vorrichtung nach der vorliegenden Erfindung an, wobei die Vorrichtung wie voranstehend beschrieben ausgebildet sein kann. Nach diesem zweiten Aspekt ist die Last an dem Strang und der Strang an dem Kran befestigt. Der Kran ist dabei derart ausgebildet, dass er den Strang räumlich bewegen kann. In der Regel läuft der Strang über eine Umlenkrolle am Kran, sodass die Länge des Strangs durch einen entsprechenden Antrieb einstellbar ist, um die Last in vertikaler Richtung zu bewegen. In Tangentialrichtung kann die Last für gewöhnlich durch Drehen eines, üblicherweise horizontal von einer Basis des Krans abstehenden Auslegers des Krans um eine Drehachse des Krans bewegt werden. In radialer Richtung ist die Last regelmäßig mittels einer in horizontaler Richtung bewegbaren Laufkatze oder eines aufwippbaren Auslegers bewegbar. Insbesondere sind die Begriffe radial und tangential in Bezug auf einen Mittelpunkt entlang einer Drehachse des Krans zu verstehen. Ein Kran nach der vorliegenden Erfindung kann auch als Portal- oder Brückenkran ausgebildet sein, wobei die Bewegungen der Strangaufhängung kartesisch statt zylindrisch stattfinden. In der Regel weist der Portal- bzw. der Brückenkran hierfür einen in einer geraden Richtung bewegbaren Träger auf, der eine Laufkatze trägt, die für gewöhnlich quer zur Bewegungsrichtung des Trägers und entlang des Trägers bewegbar ist. Meist weist der Strang an seinem freien Ende einen Haken auf, an dem die Last üblicherweise lösbar befestigt ist.

Ein Lastpendeldämpfungsmodul des erfindungsgemäßen Krans ist dazu eingerichtet, eine Bewegung des Strangs mittels Stellbefehlen derart zu steuern, dass eine Pendelbewegung der Last ausgeglichen und/oder verhindert wird. Die Lastpendeldämpfung des Lastpendeldämpfungsmoduls kann grundsätzlich wie aus dem Stand der Technik bekannt ausgestaltet sein. Dabei ist das Lastpendeldämpfungsmodul des Krans kommunikativ mit der Steuerungseinheit der Vorrichtung gekoppelt und die Stellbefehle des Lastpendeldämpfungsmoduls zur Bewegung des Seils werden mit der Ansteuerung mindestens eines der Gyroskope durch die Steuerungseinheit aufeinander abgestimmt.

Vorzugsweise ist an dem Ausleger oder an dem Träger des Krans eine zweite Laufkatze vorgesehen. An der zweiten Laufkatze ist in der Regel mindestens ein Führungsseil befestigt, das mit einem Ende an der Vorrichtung befestigbar ist. Das Führungsseil verbessert in der Regel die stabile Lage der Vorrichtung. Im Falle eines Portal- oder Hallenkrans kann die zweite Laufkatze an einem zweiten Träger vorgesehen sein. Zusätzlich oder alternativ können ein oder mehrere Führungsseile zwischen einem Führungsrahmen und der Vorrichtung gespannt sein, wobei der Führungsrahmen üblicherweise mittels einem Seilzug entlang des Kranturms in vertikaler Richtung bewegbar ist. Die Führungsseile sind in der Regel an der Vorrichtungsplattform befestigt. Die Länge der Führungsseile kann über eine Umlenkrolle an der Laufkatze bzw. des Führungsrahmens veränderbar sein. Eine Steuerung der zweiten Katze und/oder des Führungsrahmens sind in der Regel in die Kransteuerung eingebunden.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:

Figur 1 a)-d)     Seitenansichten von Ausführungsbeispielen eines erfindungsgemäßen Krans,

Figur 2     ein Kontrollflussdiagramm des Ausführungsbeispiels nach Figur 1 b), c) oder d) und

Figur 3     Seitenansicht eines Krans mit Führungsseil zur Stabilisierung einer frei hängenden Plattform.

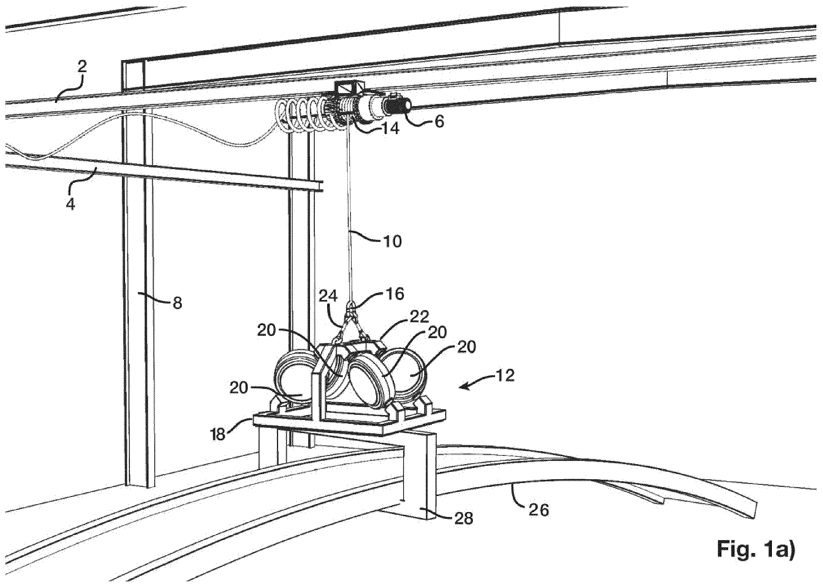

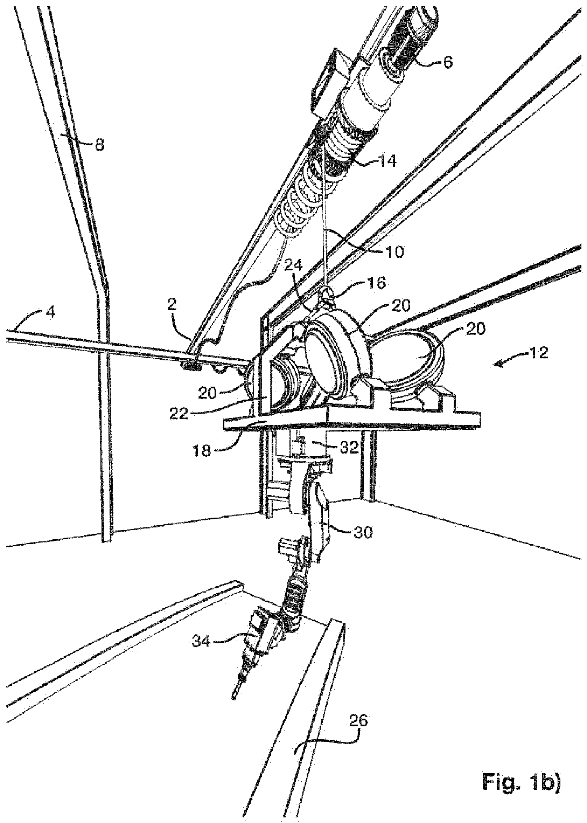

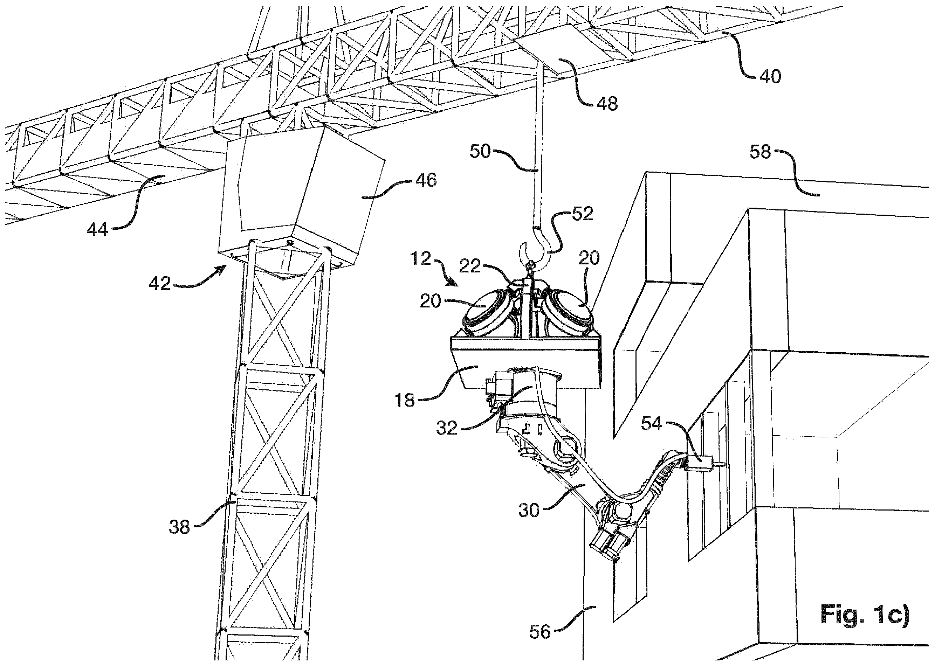

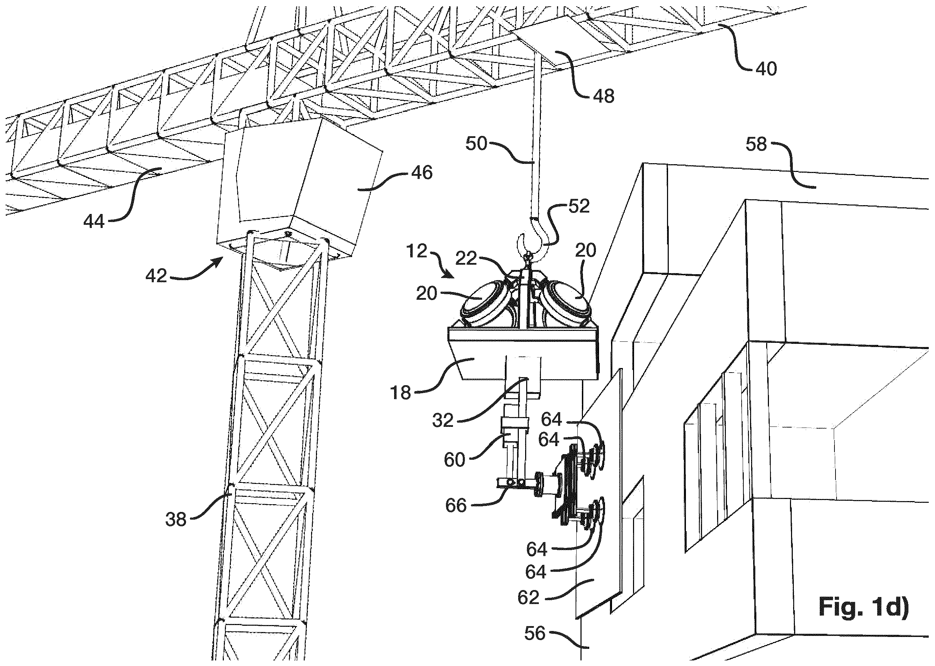

Fig. 1 a) stellt einen Brückenkran mit einem länglichen Träger 2 dar, der quer zu seiner Längsrichtung entlang einer Schiene 4 bewegbar ist. Der Träger 2 trägt an seiner Unterseite eine entlang der Längsrichtung des Trägers 2 bewegbar an dem Träger 2 befestigte Laufkatze 6. Die Schiene 4 ist an einer Hallenkonstruktion 8 befestigt. Ein Antrieb der Laufkatze und ein Antrieb des Trägers sind (nicht dargestellt und) steuerungsmäßig mit einer (nicht dargestellten) Kransteuerung verbunden.

Ein Ende eines Stahlseils 10 ist an der Laufkatze 6 befestigt und eine Vorrichtung 12 ist an dem anderen Ende des Seils 10 befestigt. Dabei weist die Laufkatze 6 eine Umlenkrolle 14 auf, über die das Seil 10 geführt ist und mittels der die Länge des Seils 10 unterhalb der Laufkatze 6 veränderbar ist. Das andere Ende des Seils 10 weist eine Öse 16 auf, die einen Aufhängungspunkt der Vorrichtung 12 an dem Seil 10 bildet. Die Vorrichtung 12 beinhaltet eine Plattform 18, auf der vier Gyroskope als "Single Gimbal Control Moment Gyroscope Roof Array" angeordnet sind. Die Gyroskope weisen jeweils einen Antrieb für ihren Rotor und einen Antrieb für ihren Kreiselrahmen auf, die innerhalb eines Kreiselrahmenträgers 20 angeordnet sind. Die Vorrichtung 12 beinhaltet des Weiteren eine (nicht dargestellte) Steuerungseinheit, die steuerungsmäßig mit dem Antrieb der Kreiselrahmen der Gyroskope verbunden ist. Werden sowohl der Rotor als auch der Kreiselrahmen der Gyroskope angetrieben, erzeugen die Gyroskope ein resultierendes Drehmoment, das über den an einem Rahmen 22 der Plattform drehfest befestigten Kreiselrahmenträger 20 auf die Vorrichtung überträgt. Der Rahmen 22 der Plattform 18 ist mittels zwei Stahlseilen 24 an der Öse 16 befestigt, sodass die Vorrichtung 12 mittels des resultierenden Drehmoments der Gyroskope in der Horizontalen drehbar und gegenüber der Horizontalen verschwenkbar ist.

Eine Last in Form eines Stahlträgers 26 ist mit der Vorrichtung 12 drehfest gekoppelt. Die Vorrichtung 12 weist hierfür einen Halterahmen 28 auf, der den Stahlträger 26 zwischen sich klemmt, wobei die Klemmung lösbar ist, nachdem der Stahlträger an den gewünschten Ort in der gewünschten Ausrichtung gebracht wurde.

Die Vorrichtung 12 hängt zusammen mit dem Stahlträger 26 und mittels des Stahlseils 10 frei an der Laufkatze 6. Ein Verfahren des Trägers 2 sowie der Laufkatze 6, um den Stahlträger 26 an eine bestimmte Stelle in der Hallenkonstruktion 8 zu bringen, führt daher in der Regel zu einer Pendelbewegung der Vorrichtung 12 samt des Stahlträgers 26. Die Kransteuerung beinhaltet ein Lastpendeldämpfungsmodul, das die Verfahrbewegungen von Träger 2 und Laufkatze 6 intelligent steuert, um Pendelbewegungen möglichst abzudämpfen. Das Lastpendeldämpfungsmodul der Kransteuerung kommuniziert mit der Steuerungseinheit der Vorrichtung 12, sodass Verfahrbewegungen von Träger und Laufkatze und das Ansteuern der Gyroskope durch die Steuerungseinheit aufeinander abgestimmt werden, sodass die resultierenden Drehmomente der Gyroskope die Lastpendeldämpfung unterstützen bzw. in Zusammenspiel mit der Kransteuerung eine Pendelbewegung verhindern. Die Kommunikation zwischen der Kransteuerung und der Steuerungseinheit der Gyroskope kann kabelgebunden oder kabellos (beispielsweise mittels Funkverbindung) sein.

Fig. 1 b) stellt einen Portalkran dar, der grundsätzlich wie in Verbindung mit Fig. 1 a) beschrieben ausgestaltet ist. Gleiche Bauteile sind mit gleichen Bezugszeichen versehen. Der Unterschied zu dem Portalkran aus Fig. 1 a) besteht darin, dass die Plattform 18 an ihrer Unterseite statt des Halterahmens 28 und des Stahlträgers 26 einen beweglichen Roboterarm 30 als Last aufweist. Der Roboterarm 30 ist mittels eines Robotersockels mit Flansch 32 lösbar an der Plattform 18 befestigt. Der Roboterarm 30 hat mehrere Gelenke und weist an seinem freien Ende ein Werkzeug 34 zur Bearbeitung eines Stahlträgers 26 auf. Ein Steuerungsmodul ist mit einem Antrieb des Roboterarms 30 sowie einem Antrieb des Werkzeugs 34 steuerungsmäßig verbunden.

Sowohl Bewegungen des Roboterarms 30 als auch die mit dem Werkzeug 34 ausgeführten Aktionen führen üblicherweise dazu, dass die Vorrichtung 12 aus einer Gleichgewichtslage gebracht wird. Dadurch entstehen Pendelschwingungen der Vorrichtung 12 und des an der Vorrichtung 12 befestigten Roboterarms 30. Das Lastpendeldämpfungsmodul der Kransteuerung kommuniziert mit der Steuerungseinheit der Vorrichtung 12, die wiederum mit dem Steuerungsmodul des Roboterarms kommuniziert, sodass Verfahrbewegungen von Träger und Laufkatze, das Ansteuern der Gyroskope durch die Steuerungseinheit und die Bewegungen des Roboterarms 30 aufeinander abgestimmt werden, sodass die resultierenden Drehmomente der Gyroskope und die Bewegungen des Roboterarms die Lastpendeldämpfung unterstützen bzw. in Zusammenspiel mit der Kransteuerung eine Pendelbewegung verhindern während das Werkzeug eine Aktion ausführt. Die Kommunikation zwischen der Steuerungseinheit der Gyroskope mit der Kransteuerung und dem Steuerungsmodul des Roboterarms 30 kann kabelgebunden oder kabellos (beispielsweise mittels Funkverbindung) sein. Üblicherweise weist die Steuerungseinheit der Vorrichtung eine Logikeinheit auf, die derart eingerichtet ist, dass sie die Motormomente des Antriebs des Roboterarms 30 und des Antriebs des Werkzeugs 34 und eine dazugehörige zu erwartende Abweichung der Vorrichtung von der Gleichgewichtslage aus den Steuerungsbefehlen des Steuerungsmoduls und einem in der Logikeinheit hinterlegten Reaktionsplan vorhersagen bzw. schätzen kann. Somit kann der Roboterarm 30 mit dem Werkzeug 34 über einen großen Arbeitsraum Fertigungsprozesse ausführen.

Die Figur 1 c) stellt einen obendrehenden Turmdrehkran mit einem Kranturm 38 und einem von dem Kranturm 38 in horizontaler Richtung abstehenden Ausleger 40 dar, wobei das Tragwerk des Kranturms 38 und das des Auslegers 40 jeweils eine Fachwerkkonstruktion ist. Ein Drehwerk 42 befindet sich am oberen Ende des Kranturms 38, sodass bei Drehbewegungen durch das Drehwerk 42 nur der Ausleger 40 und ein ihm gegenüberliegender Gegenausleger 44 bewegt werden. Die Kransteuerung erfolgt über eine Fernsteuerung (nicht abgebildet) odervon einer Krankabine 46 aus, die sich in der Nähe des Drehwerks 42 befindet.

Eine Laufkatze 48 ist entlang des Auslegers 40 beweglich. Ein Stahlseil 50 ist an der Laufkatze 48 befestigt und um eine Umlenkrolle der Laufkatze 48 geführt, um die Länge des Stahlseils unterhalb der Laufkatze 48 zu variieren. Das untere Ende des Stahlseils 50 weist einen Haken 52 auf, an dem eine Vorrichtung 12 befestigt ist, die wie in Verbindung mit Fig. 1b) beschrieben ausgestaltet ist. Gleiche Bauteile sind mit gleichen Bezugszeichen versehen. Auch an der Vorrichtung 12 nach Fig. 1 c) ist ein Roboterarm 30 befestigt, der von einem Steuerungsmodul gesteuert bewegbar ist. Am freien Ende des Roboterarms 30 ist ein Werkzeug 54 vorgesehen, das vorliegend zur Ausführung von Arbeitsschritten an einer Außenwand 56 eines Gebäudes 58 angepasst ausgebildet ist.

Pendelbewegungen können wie obig beschrieben gedämpft bzw. ausgeglichen oder verhindert werden. Die Vorteile eines obendrehenden Krans (große erreichbare Ausladungen und Tragfähigkeiten, geringer Platzbedarf im Bereich des Standortes sowie große Turmhöhen) können so mit den Vorzügen von Industrierobotern vereint werden.

Die Figur 1 d) stellt einen obendrehenden Turmdrehkran dar, der wie in Verbindung mit Figur 1 c) beschrieben ausgestaltet ist und an dem eine Vorrichtung 12 befestigt ist, die wie vorangehend beschrieben ausgestaltet ist. Gleiche Bauteile sind mit gleichen Bezugszeichen versehen. An der Unterseite der Plattform 18 ist eine durch ein Steuerungsmodul gesteuerte Kinematk 60 befestigt, die eine Glasplatte 62 hält, indem ein Unterdruck durch Saugnäpfe 64 an der Glasplatte 62 angelegt ist. Der Roboter 60 weist ein Gelenk 66 auf, mittels welchem die Glasplatte 62 verschwenkt werden kann. Somit kann die Glasplatte 62 mit an der Vorrichtung 12 befestigtem Roboter 60 von einem Lagerort aufgehoben und in wie in Fig. 1 d) angedeutet in ein Fenster eines Gebäudes 58 eingesetzt werden. Pendelbewegungen bei dem Transport oder dem Einsetzen der Glasplatte können wie obig beschrieben gedämpft bzw. ausgeglichen oder verhindert werden.

Die Steuerungseinheit der Vorrichtung 12 nach den Figuren 1 a) bis d) ist in der Regel zur Kommunikation mit Sensoren geeignet ausgebildet, die Abweichungen der Vorrichtung von der Gleichgewichtsposition oder äußere Störgrößen, wie z.B. Wind oder Kollisionen, erfassen.

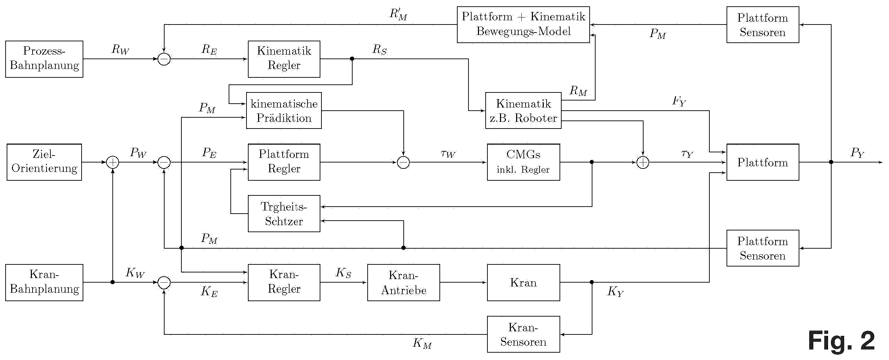

Die in Figur 2 als Kran-Bahnplanung bezeichnete Eingangsgröße entspricht einer geplanten Bewegung des Strangs im Raum mittels des Krans. Diese Eingangsgröße wird von dem als Kran-Regler bezeichneten Lastpendeldämpfungsmodul zur intelligenten Ansteuerung der Kran-Antriebe verwendet. Die Bewegung des Strangs mittels des Krans wird von Kransensoren erfasst, deren Signale wiederum Eingang in das Lastpendeldämpfungsmodul finden.

Die in Figur 2 als Ziel-Orientierung bezeichnete Eingangsgröße entspricht einer gewünschten Lage der Last an einem bestimmten Ort. Diese Eingangsgröße wird von der als Plattform-Regler bezeichneten Steuerungseinheit dazu verwendet, die als CMGs bezeichneten Gyroskope so anzusteuern, dass die Last die gewünschte Lage an dem bestimmten Ort einnimmt. Dabei berücksichtigt die Steuerungseinheit die Kranbahnplanung. Die Gyroskope sind vorliegend mit einer Plattform gekoppelt, an der ein Roboter befestigt ist. Die Plattform mit dem Roboter bildet vorliegend die Last.

Die in Figur 2 als Prozess-Bahnplanung bezeichnete Eingangsgröße entspricht einer gewünschten Bewegung bzw. einer gewünschten Aktion des Roboters, die der Roboter gesteuert von einem als Kinematik-Regler bezeichneten Steuerungsmodul ausführt. Die von dem Steuerungsmodul ausgehenden Steuerungsbefehle werden als kinematische Prädiktion von der Steuerungseinheit zur Ansteuerung der Gyroskope berücksichtigt. Der Plattform sind Plattformsensoren zugeordnet, deren Signale Eingang in einen Trägheitsschätzer und ein Bewegungsmodell finden. Der Trägheitsschätzer bestimmt anhand des durch die Gyroskope auf die Last übertragenen Drehmoments und einer gemessenen Rotationsgeschwindigkeit der Last die Trägheit der Last. Die Trägheit der Last findet wiederum Berücksichtigung von der Steuerungseinheit zur Ansteuerung der Gyroskope. Das Bewegungsmodell findet wiederum Eingang in das Steuerungsmodul.

Der Kontrollfluss des Ausführungsbeispiels gemäß Figur 2 verdeutlicht die ganzheitliche Lösung zur kontrollierten Bewegung und Stabilisierung einer Last. Da sich die Dynamik des Krans, die Dynamik der starren Plattform sowie die Dynamik des beweglichen Roboters gegenseitig beeinflussen, finden diese Eingang in die Ansteuerung der Gyroskope durch die Steuerungseinheit. So gleicht bzw. verhindert der Kran nach diesem Ausführungsbeispiel eine Pendelbewegung beim Transport der Last zu einem Zielort, bei der Ausrichtung der Last am Zielort und bei einer kontrollierten Bewegung oder Aktion des beweglichen Elements der Last.

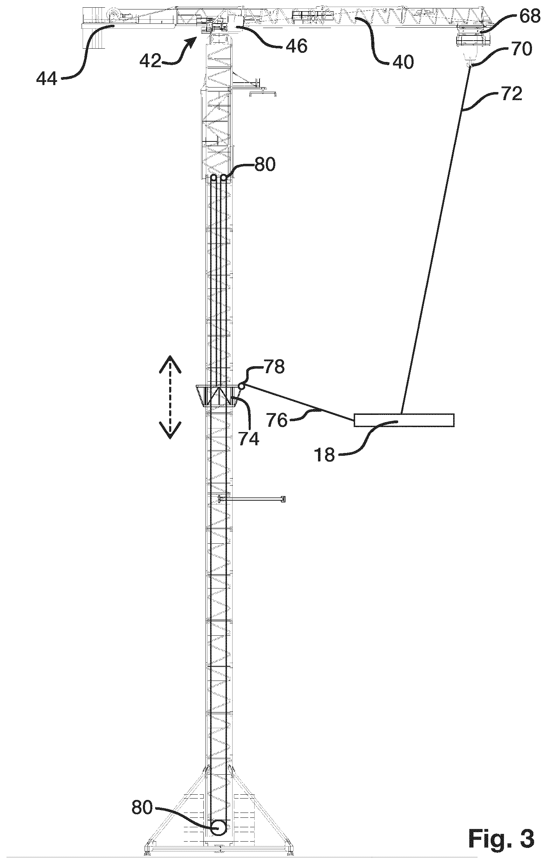

Die Figur 3 stellt einen obendrehenden Kran mit einem Kranturm 38, einem Drehwerk 42, einem Ausleger 40, einem mit Gewichten versehenen Gegenausleger 44 und einer Krankabine 46 dar. Entlang des Auslegers 40 ist eine Laufkatze 68 beweglich gehalten. Die Laufkatze 68 weist einen Haken 70 auf, an dem ein Ende eines Stahlseils 72 befestigt ist. Das andere Ende des Stahlseils 72 ist an einer Plattform 18 befestigt, die wie in den Figuren 1 a) bis d) dargestellt ausgestaltet sein kann. Insbesondere kann die Plattform 18 Teil einer erfindungsgemäßen Vorrichtung 12 sein, die in Fig. 3 nicht vollständig dargestellt ist. Entsprechend ist in der Regel die Kransteuerung kommunikativ mit der Steuerungseinheit der Vorrichtung 12 verbunden. Die Steuerungseinheit der Vorrichtung 12 kann wiederum kommunikativ mit einem Steuerungsmodul eines Aktors verbunden sein, welcher bevorzugt an der Unterseite der Plattform 18 befestigt sein kann. Der Kranturm 38 des Krans weist einen Führungsrahmen 74 auf, der entlang des Kranturms 38 bewegbar ist (siehe vertikaler Doppelpfeil) und an welchem ein Führungsseil 76 befestigt und zur Veränderung seiner Länge über eine Umlenkrolle 78 geführt ist. Die Rollen eines die vertikale Position des Führungsrahmens 74 verändernden Seilzugs sind vorliegend mit Bezugszeichen 80 gekennzeichnet. Eine Steuerung zur Veränderung der Länge des Führungsseils 76 und zur Veränderung der vertikalen Position des Führungsrahmens 74 ist üblicherweise in die Kransteuerung eingebunden. Das Führungsseil 76 verbessert die Lagestabilisierung der Plattform 18.

### Bezugszeichenliste

| | | | |
|---|---|---|---|
| 2 | Träger | 52 | Haken |
| 4 | Schiene | 54 | Werkzeug |
| 6 | Laufkatze | 56 | Außenwand |
| 8 | Hallenkonstruktion | 58 | Gebäude |
| 10 | Stahlseil | 60 | Kinematik |

(fortgesetzt)

| | | | |
|---|---|---|---|
| 12 | Vorrichtung | 62 | Glasplatte |
| 14 | Umlenkrolle | 64 | Saugnapf |
| 16 | Öse | 66 | Gelenk |
| 18 | Plattform | 68 | Laufkatze |
| 20 | Gyroskop-Kreiselrahmen | 70 | Haken |
| 22 | Rahmen | 72 | Stahlseil |
| 24 | Stahlseil | 74 | Führungsrahmen |
| 26 | Stahlträger | 76 | Führungsseil |
| 28 | Halterahmen | 78 | Umlenkrolle |
| 30 | Roboterarm | 80 | Seilzug-Rolle |
| 32 | Robotersockel mit Flansch | | |
| 34 | Werkzeug | | |
| 38 | Kranturm | | |
| 40 | Ausleger | | |
| 42 | Drehwerk | | |
| 44 | Gegenausleger | | |
| 46 | Krankabiene | | |
| 48 | Laufkatze | | |
| 50 | Stahlseil | | |

**Patentansprüche**

1. Vorrichtung (12) zur Steuerung einer an einem Strang hängenden beweglichen Last, **dadurch gekennzeichnet, dass** die bewegliche Last einen steuerbaren Aktor aufweist, der ein Montageroboter ist, und eine Steuerungseinheit vorgesehen ist, die dazu eingerichtet ist, Steuerungsbefehle zur Steuerung des Aktors zur Vorhersage einer zu erwartenden Gegenbewegung der beweglichen Last zu verwenden, um die Gegenbewegung der beweglichen Last durch Ansteuern mindestens einer durch die Steuerungseinheit angesteuerten Ausgleichseinrichtung auszugleichen und/oder zu verhindern.

2. Vorrichtung (12) nach Anspruch 1, **dadurch gekennzeichnet, dass** die Ausgleichseinrichtung eine Mehrzahl an Gyroskopen umfasst, die zur Übertragung eines Kraftmoments mit der beweglichen Last koppelbar sind, wobei das Kraftmoment durch eine Rotation einer Drehachse von mindestens einem der Gyroskope erzeugbar ist, und die Steuerungseinheit steuerungsmäßig mit den Gyroskopen zur Steuerung der Rotation der Drehachse derart verbunden ist, dass eine Pendelbewegung der beweglichen Last ausgleichbar und/oder verhinderbar und die bewegliche Last um ihre Aufhängung kipp- und/oder rotierbar ist.

3. Vorrichtung (12) nach Anspruch 1 oder 2, **dadurch gekennzeichnet, dass** die Vorrichtung (12) derart eingerichtet ist, dass die bewegliche Last in einer Lage, die nicht der Gleichgewichtslage entspricht, in einem Kräftegleichgewicht haltbar ist.

4. Vorrichtung (12) nach einem der vorherigen Ansprüche, **dadurch gekennzeichnet, dass** das bewegliche Element einen steuerbaren Aktor aufweist, dessen Bewegungen derart steuerbar sind, dass sie die Pendelbewegung der beweglichen Last unterstützend ausgleichen und/oder verhindern.

5. Vorrichtung (12) nach einem der vorherigen Ansprüche, **dadurch gekennzeichnet, dass** mittels des Aktors ein Arbeitsschritt ausführbar ist, dessen Wechselwirkungsmoment auf die bewegliche Last durch Ansteuern mindestens eines der Gyroskope ausgleichbar ist.

6. Vorrichtung (12) nach einem der vorherigen Ansprüche, **gekennzeichnet durch** einen Sensor zur Erfassung einer externen Störgröße, dessen Signale an die Steuerungseinheit übermittelbar und von dieser zum Ausgleich und/oder zur Verhinderung der Pendelbewegung der beweglichen Last durch Ansteuern mindestens eines der Gyroskope auswertbar sind.

**7.** Vorrichtung (12) nach einem der vorherigen Ansprüche, **gekennzeichnet durch** einen Sensor zur Erfassung einer Pendelbewegung der beweglichen Last, wobei die Signale an die Steuerungseinheit übermittelbar und von dieser zum Ausgleich und/oder zur Verhinderung der Pendelbewegung der beweglichen Last durch Ansteuern mindestens eines der Gyroskope auswertbar sind.

**8.** Vorrichtung (12) nach einem der vorherigen Ansprüche, **gekennzeichnet durch** einen Sensor zur Erfassung einer Lage der beweglichen Last relativ zu ihrer Aufhängung, wobei die Signale an die Steuerungseinheit übermittelbar und von dieser auswertbar sind.

**9.** Kran mit einer Vorrichtung (12) nach einem der vorherigen Ansprüche, wobei die bewegliche Last an dem Strang und der Strang an dem Kran befestigt und durch den Kran räumlich bewegbar ist.

**10.** Kran nach Anspruch 9 **gekennzeichnet durch** ein Lastpendeldämpfungsmodul, das dazu eingerichtet ist, eine Bewegung des Strangs mittels Stellbefehlen derart zu steuern, dass eine Pendelbewegung der beweglichen Last ausgeglichen und/oder verhindert wird und wobei das Lastpendeldämpfungsmodul des Krans kommunikativ mit der Steuerungseinheit der Vorrichtung (12) gekoppelt ist und die Stellbefehle des Lastpendeldämpfungsmoduls zur Bewegung des Seils mit der Ansteuerung der Drehachse durch die Steuerungseinheit aufeinander abstimmbar sind.

**Claims**

**1.** Apparatus (12) for controlling a movable load suspended on a cord,
**characterized in that** the movable load has a controllable actuator, which is an assembly robot, and a control unit is provided, which is configured to use control commands for controlling the actuator in order to predict a load countermovement to be expected, so as to compensate for and/or prevent the load countermovement by controlling at least one compensating device controlled by the control unit.

**2.** Apparatus (12) according to claim 1, **characterized in that** the compensating device comprises a plurality of gyroscopes, which are adapted to be coupled to the load in order to transmit a moment of force, the moment of force being generable by a rotation of an axis of rotation of at least one of the gyroscopes, and
the control unit is connected in terms of control to the gyroscopes, so as to control the rotation of the axis of rotation in such a way that a pendulum movement of the load can be compensated for and/or prevented and the load can be tilted and/or rotated about its suspension.

**3.** Apparatus (12) according to claim 1 or 2, **characterized in that** the apparatus (12) is configured such that the load can be maintained in an equilibrium of forces at a position that does not correspond to the equilibrium position.

**4.** Apparatus (12) according to one of the preceding claims, **characterized in that** the movable element comprises a controllable actuator, the movements of which are controllable such that they supportively compensate for and/or prevent the pendulum movement of the load.

**5.** Apparatus (12) according to one of the preceding claims, **characterized in that,** by means of the actuator, a working step can be executed, whose moment of interaction on the load can be compensated for by controlling at least one of the gyroscopes.

**6.** Apparatus (12) according to one of the preceding claims, **characterized by** a sensor which is used for detecting an external disturbance variable and the signals of which can be transmitted to the control unit and can be evaluated by the latter for compensating for and/or preventing the pendulum movement of the load by controlling at least one of the gyroscopes.

**7.** Apparatus (12) according to one of the preceding claims, **characterized by** a sensor for detecting a pendulum movement of the load, the signals being adapted to be transmitted to the control unit and evaluated by the latter for compensating for and/or preventing the pendulum movement of the load by controlling at least one of the gyroscopes.

**8.** Apparatus (12) according to one of the preceding claims, **characterized by** a sensor for detecting a position of the load relative to its suspension, the signals being adapted to be transmitted to the control unit and evaluated by the latter.

**9.** A crane comprising an apparatus (12) according to one of the preceding claims, wherein the load is attached to the cord and the cord is attached to the crane and is movable in space by the crane.

10. The crane according to claim 9, **characterized by** a load-sway damping module configured for controlling a movement of the cord by means of positioning commands in such a way that a pendulum movement of the load is compensated for and/or prevented, and wherein the load-sway damping module of the crane is communicatively coupled to the control unit of the apparatus (12) and the positioning commands of the load-sway damping module for the movement of the rope can be coordinated with the controlling of the axis of rotation through the control unit.

## Revendications

1. Dispositif (12) pour la commande d'une charge mobile suspendue à un câble, **caractérisé en ce que** la charge mobile comporte un actionneur commandable qui est un robot de montage et qu'une unité de commande est fournie, laquelle est conçue pour utiliser des instructions de commande pour commander l'actionneur pour prédire un mouvement contraire attendu de la charge mobile, afin de compenser et/ou d'empêcher le mouvement contraire de la charge mobile en commandant au moins une installation de compensation commandée par l'unité de commande.

2. Dispositif (12) selon la revendication 1, **caractérisé en ce que** l'installation de compensation comprend une pluralité de gyroscopes qui peuvent être couplés à la charge mobile pour la transmission d'un moment de force, où le moment de force peut être généré par une rotation d'un axe de rotation d'au moins un des gyroscopes, et l'unité de commande est reliée de manière commandée aux gyroscopes pour la commande de la rotation de l'axe de rotation de telle manière qu'un mouvement de balancement de la charge mobile puisse être compensé et/ou empêché et que la charge mobile puisse être basculée et/ou mise en rotation autour de sa suspension.

3. Dispositif (12) selon la revendication 1 ou 2, **caractérisé en ce que** le dispositif (12) est conçu de telle sorte que la charge mobile peut être maintenue en équilibre de forces dans une position qui ne correspond pas à la position d'équilibre.

4. Dispositif (12) selon l'une des revendications précédentes, **caractérisé en ce que** l'élément mobile comporte un actionneur commandable dont les mouvements sont commandables de telle sorte qu'ils compensent et/ou empêchent en soutien le mouvement de balancement de la charge mobile.

5. Dispositif (12) selon l'une des revendications précédentes, **caractérisé en ce que**, au moyen de l'actionneur, une étape de travail peut être effectuée, dont le moment d'interaction sur la charge mobile peut être compensé par la commande d'au moins un des gyroscopes.

6. Dispositif (12) selon l'une des revendications précédentes, **caractérisé par** un capteur pour la détection d'une grandeur perturbatrice externe, dont les signaux peuvent être transmis à l'unité de commande et exploités par celle-ci pour la compensation et/ou l'empêchement du mouvement de balancement de la charge mobile par commande d'au moins un des gyroscopes.

7. Dispositif (12) selon l'une des revendications précédentes, **caractérisé par** un capteur pour la détection d'un mouvement de balancement de la charge mobile, où les signaux peuvent être transmis à l'unité de commande et exploités par celle-ci pour compenser et/ou empêcher le mouvement de balancement de la charge mobile par la commande d'au moins un des gyroscopes.

8. Dispositif (12) selon l'une des revendications précédentes, **caractérisé par** un capteur pour la détection d'une position de la charge mobile par rapport à sa suspension, où les signaux peuvent être transmis à l'unité de commande et exploités par celle-ci.

9. Grue comprenant un dispositif (12) selon l'une des revendications précédentes, où la charge mobile est fixée au câble et le câble est fixé à la grue et peut être déplacé dans l'espace par la grue.

10. Grue selon la revendication 9, **caractérisée par** un module d'amortissement de balancement de charge qui est conçu pour commander un mouvement du câble au moyen d'instructions de réglage de telle sorte qu'un mouvement de balancement de la charge mobile soit compensé et/ou empêché, et où le module d'amortissement de balancement de charge de la grue est couplé de manière communicative à l'unité de commande du dispositif (12) et les instructions de réglage du module d'amortissement de balancement de charge pour le mouvement de la corde peuvent être coordonnées avec la commande de l'axe de rotation par l'unité de commande.

Fig. 1a)

Fig. 1b)

Fig. 1c)

EP 3 953 287 B1

Fig. 1d)

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018192675 A1
- US 2015344271 A1
- EP 0675824 B1